# EUROPÄISCHE PATENTSCHRIFT

(11) **EP 0 786 482 B1**
(45) Veröffentlichungstag und Bekanntmachung des Hinweises auf die Patenterteilung: **16.08.2000**
(21) Anmeldenummer: 97101002.0
(22) Anmeldetag: 23.01.1997
(51) Int. Cl.: C08G 69/20, C08G 69/18

(54) **Flüssigsystem für die anionische Lactampolymerisation**
Liquid system for the anionic lactam polymerisation
Systéme liquide pour la polymérisation anionique de lactames

(30) Priorität: 25.01.1996 DE 19602683
(43) Veröffentlichungstag der Anmeldung: 30.07.1997
(73) Patentinhaber: EMS-INVENTA AG, 8002 Zürich (CH)
(72) Erfinder: Schmid, Eduard, Dr., 7402 Bonaduz (CH); Eder, Roman, 70794 Filderstadt (DE)
(74) Vertreter: Hotz, Klaus, Dipl.-El.-Ing./ETH

(56) Entgegenhaltungen:
- EP-A- 0 438 762
- DE-A- 1 495 132
- DE-A- 1 495 848
- DE-A- 1 520 605
- DE-A- 2 035 733
- DE-A- 2 230 732
- US-A- 3 575 938

## Beschreibung

Die Erfindung betrifft ein bei Raumtemperatur flüssiges System für die anionische Lactampolymerisation.

Polyamide werden gemäss dem relevanten Stand der Technik meist nach der Methode der sogenannten hydrolytischen Polymerisation aus Lactamen in der Schmelze bei Temperaturen von ca. 200 bis 320°C hergestellt, bei der zur Ringöffnung des Lactams oft eine Druckphase unter Wasserzusatz vorgeschaltet ist. Diese Reaktion verläuft langsam. Das Reaktionsprodukt, bevorzugt ein Granulat, wird in einem Nachfolgeschritt, z.B. im Spritzguss- oder Extrusionsverfahren, zu Gebrauchsgegenständen umgeformt.

Auch starke Basen, die z.B. zur Bildung von Metall-Lactamat führen, können die Umwandlung von Lactam zum Polyamid bewirken. Die entsprechende Polymerisationsreaktion verläuft langsam und wurde abgelöst durch die aktivierte anionische Lactampolymerisation, bei der die Reaktion stark beschleunigt ist und die Polymerisationstemperatur unter den Polymerschmelzpunkt abgesenkt werden kann. Bei diesem Verfahren werden der Lactamschmelze Katalysator und Aktivator getrennt zugefügt.

Üblicherweise liegt dabei der Katalysator als Feststoff, z.B. als Alkali- oder als Erdalkali-Lactamat vor. Auch viele der aktivierenden sogenannten Cokatalysatoren wie z.B. Carbodiimide und verkappte Isocyanate, sind Feststoffe. Der Nachteil der freien Isocyanate, von denen viele flüssig sind, ist ihre hohe Toxizität.

Die anionische Lactampolymerisation und die aktivierte anionische Lactampolymerisation sowie alle Aspekte der Polyamidsynthese und die entsprechenden Anwendungen, sind z.B. beschrieben im Kunststoffhandbuch Band VI, Polyamide, C.Hanser Verlag, München.

Die aktivierte anionische Lactampolymerisation wird im allgemeinen zur Herstellung von sog. Gussteilen oder von grossvolumigem Halbzeug, wie Profilen, bevorzugt nach dem sogenannten 2-Topfverfahren durchgeführt.
Dabei werden volumengleiche, den Katalysator bzw. den Cocatalysator enthaltende Lactamschmelzen hergestellt, zusammengefügt und intensiv vermischt. Dadurch wird die Polymerisation gestartet und die Schmelze kann unmittelbar danach, z.B. im sogenannten Monomerguss-Verfahren, zum Fertigteil verarbeitet werden.
Dazu muss möglichst darauf geachtet werden, dass
- die Lactamschmelzen wasser- und sauerstofffrei sind,
- die Misch- und Verarbeitungsschritte unter Inertgas erfolgen und
- die Schmelzen, insbesondere katalysatorhaltige Schmelzen rasch verarbeitet werden, da sie sehr schnell altern.

Um die rasche und homogene Verteilung des Katalysators, z.B. von Magnesium- oder Natrium-Lactamat, in der Lactamschmelze zu erleichtern, wurden sogenannte Flüssigkatalysatorsysteme entwickelt.

In der ***DE-A-22 30 732*** wird dabei auf die Schwierigkeiten eingegangen, welche die Zugabe von Katalysator in fester Form, z.B. von Metall-Lactamat, zur aktivatorhaltigen Lactamschmelze verursacht. Sind schnelles Lösen und gleichmässiges Verteilen des Katalysators nicht gewährleistet, entsteht ein inhomogenes Polymer.

In ***DE-A-14 95 132*** wird zur Problemlösung eine bei 60°C flüssige Lösung von Alkali-Lactamat in Lactam vorgeschlagen, die zusätzlich 0,3 bis 5,0 Gew.% eines schwerflüchtigen Amins enthält.

Eine Katalysatorlösung von Metall-Lactamat in einem N,N-disubstituierten Carbonsäureamid, insbesondere in N-Methylpyrrolidon, ist in der US-A-3,575,938 beschrieben. Dort sind als weitere Säureamide genannt:
N,N-Dimethylformamid, N,N-Dimethylacetamid, N,N-Dimethylpropionamid, N-Phenyl-N-methylacetamid, N-Naphthyl-N-ethylacetamid, N,N-Diethylisobutyramid, N-Methylformanilid, N-Ethylacetanilid, N-Ethyl-4-nitroacetanilid, N-n-Butylacetanilid, N-ethyl-o-acetotoluidid,N,N'-p-Phenylen-bis- acetanilid, 2-Chlor-N-ethylacetanilid, N,N'-Diphenylacetanilid, N,N'-Diphenylformamid, N,N'-Diethylformamid, N-Methyl-N-1-naphthylacetamid, N,N-Di-n-butylacetamid, N.N-Diisopropylpropionamid, t-Butyl-N-octyldecanamid, N,N-Dimethylbenzamid, N,N-Diethyl-p-toluamid, N-Methylpyrrolidon, N-Phenylcaprolactam, N-Ethyl-α-pyrrolidon, N-Phenylpiperidon, N-lsopropylcaprolactam, N-Cyclohexyldodecanolactam, N-Acetylpyridin, N-Acetylpiperidin, n-Propionylmorpholin, N-Acetylmorpholin

Die verbesserte Zugabe und Verteilung dieser Katalysatorlösung in eine aktivierte Lactamschmelze erlaubt auch die Herstellung mineralgefüllter Produkte.
Die Katalysatorlösungen verschlacken sofort an der Luft und sind bei Raumtemperatur nicht flüssig. Sie müssen somit vor der Verwendung aufgeschmolzen werden.

Nach der Lehre der ***DE-A-22 30 732*** muss die das Verfahren störende Krustenbildung, welche Katalysatorlösungen aus Alkali-Lactamat in **2-Pyrrolidon** rasch zeigen, durch Zugabe höherer Alkohole verhindert werden. Diese Lösungen werden ebenfalls unter 20°C fest.

In der ***EP-A-0 438 762*** sind Katalysatorlösungen mit hoher Lagerstabilität auch bei tiefen Temperaturen beschrieben, die einen raschen Umsatz ermöglichen und zu Polyamid mit relativ niedrigen Restgehalt an Extrakt führen. Sie bestehen aus Lactam, 2-Pyrrolidon, speziellen Glykolen, Kohlenwasserstoffen und enthalten wahlweise Amin. Die niedrigen Siedepunkte einzelner Komponenten der Lösungen schränken jedoch die Verwendung stark ein.

Im zitierten Stand der Technik müssen zur Durchführung der aktivierten anionischen Lactampolymerisation Aktivator- und Katalysator-Lösung immer separat verwendet werden. Damit sind erhebliche verfahrenstechnische Nachteile verbunden: In einem vorgezogenen Verfahrensschritt muss der Lactamschmelze zunächst der Aktivator zugesetzt werden, bevor mit Zugabe der Katalysatorlösung die Reaktion ausgelöst werden kann.

Der vorliegenden Erfindung war somit die Aufgabe gestellt, Nachteile des Standes der Technik durch ein geeignetes, bei Raumtemperatur flüssiges, lagerstabiles Katalysator / Aktivator-System zu überwinden, das allein in der Lage ist, die Polymerisaion des Lactams auszulösen, kurze Polymerisationszeiten ermöglicht und zu Polylactamen von hoher Qualität führt.

Diese Aufgabe wird durch folgendes bei Raumtemperatur flüssige System für die anionische Lactampolymerisation und seine Verwendung zur Auslösung der Lactampolymerisation gelöst:

Bei Raumtemperatur flüssiges System für die anionische Laktampolymerisation, bestehend aus dem Umsetzungsprodukt von:
a) mehr als 30 bis 80 Gew.- Teilen
   a1) mindestens einer N- substituierten Carbonsäureamidverbindung der Formel I 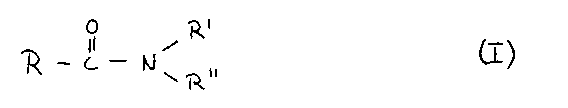 wobei R = Wasserstoff oder ein einwertiger Kohlenwasserstoffrest mit bis zu 12 C- Atomen ist,
      R'= ein einwertiger Kohlenwasserstoffrest mit bis zu 12 C- Atomen und
      R"= einwertiger Kohlenwasserstoffrest mit bis zu 20 C- Atomen ist,
      wobei zwei der Substituenten R und R' oder R' und R" gegebenenfalls miteinander verbunden sind und ein Ringsystem bilden
      und/oder
   a2) Butyro- oder Valerolactam,
b) 5 bis 30 Gew.- Teilen mindestens eines Alkali- und/oder Erdalkali- Lactamates,
c) 10 bis 40 Gew.- Teilen mindestens eines Aktivators für die anionische Laktampolymerisation, welcher in a) und d) löslich ist,
d) 0 bis 30 Gew.- Teilen mindestens eines Tetraalkylharnstoffs und/oder eines N- dialkylierten cyclischen Harnstoffs
gegebenenfalls e) 2 bis 30 Gew.- Teilen Caprolactam
wobei sich die Anteile von a), b), c), d) und e) auf 100 Gew. - Teile ergänzen
und gegebenenfalls f) weiteren Additiven.

Sie wird insbesondere gelöst, durch ein flüssiges lagerstabiles System, das Aktivator und Katalysator zugleich enthält, das dadurch die Verwendung getrennter Lösungen von Aktivator und Katalysator unnötig macht und das der aktivierten anionischen Laktampolymerisation eine wesentliche Erweiterung in der Anwendung, der Rezeptur und dem Verfahren sichert.

Ueberrascherderweise wurde gefunden, dass die als Aktivatoren geeigneten Verbindungen, wie verkappte, insbesondere durch Lactam verkappte Isocyanate, Carbodiimide und Oxazoline, insbesondere Fettalkylbisoxazoline in der Lage sind, in Gegenwart von Katalysator mit geeigneten Lösungsmitteln bei Raumtemperatur flüssige, an trockener Luft lagerstabile Systeme zu bilden.

Das einer wasserfreien Lactamschmelze zuzusetzende, erfindungsgemässe Flüssigsystem besteht somit im wesentlichen aus dem Umsetzungsprodukt von
a) mindestens einer N-substituierten Carbonsäureamidverbindung, die auch einen durch zwei ihrer Substituenten R und R' oder R' und R" gebildeten heterocyclischen Ring enthalten kann, als Basiskomponente und Lösungsmittel, und/oder Butyro- oder Valerolactam,
b) mindestens einem Alkali- oder Erdalkali-Lactamat als Katalysator,
c) mindestens einer die anionische Laktampolymerisation aktivierenden Verbindung und
d) gegebenenfalls mindestens eines Tetraalkylharnstoffs und/oder einer N-alkylierten cyclischen Harnstoffverbindung als zusätzlichem Lösungsmittel,
e) gegebenenfalls 2 bis 30 Gew.-Teilen Caprolactam,
wobei sich a), b), c), d) und e) auf 100 Gew.-Teile ergänzen, und
e) gegebenenfalls weiteren Additiven, die die Polymerisation nicht oder nicht wesentlich beeinträchtigen und mit den Komponenten a), b), c) d) und e) verträglich sind.

N-alkylierte und dialkylierte Carbonsäureamide a) an sich sind Stand der Technik, wie beispielsweise beschrieben in der ***US 3,575,938***.
Der Anteil der Verbindung a) beträgt bevorzugt 30 bis 70 Gew.-Teile, dabei sind Lactame, wie Butyro- und Valerolactam neben Di-N-alkylformamid, Di-N-alkylacetamid, N-Acetylanilin, N-Acetylpiperidin, N,N'-Diacylpiperazin, N-Octyl-2-pyrrolidon und N-alkyliertes Lactam, welches C1 bis C12- Alkyl-Reste aufweist, bevorzugt.

Der Anteil des Lactamates b) liegt vorteilhaft zwischen 5 und 25 Gew.-Teilen; dabei sind als Alkali-Lactamate Natrium-Lactamate und insbesondere Natrium-Caprolactamat und Natrium-Laurinlactamat und als Erdalkali-Lactamate Magnesium-Lactamate, insbesondere Magnesium-Caprolactamat und Magnesium-Laurinlactamat bevorzugt.

Die Herstellung der Alkali- und Erdalkali-Lactamate ist Stand der Technik und beispielhaft beschrieben in der ***US 3,575,938.***
Natrium-Caprolactamat ist ein Handelsprodukt der Fa.Pacast AG, CH-7320 Sargans, sowie der Fa. L. Brüggemann. D-74076 Heilbronn.

Bevorzugte aktivierende Verbindungen c) sind verkappte, insbesondere mit Lactamen, wie Caprolactam verkappte Mono-, Di- und Polyisocyanate, darunter besonders Diphenylmethandiisocyanate, Hexamethylendiisocyanat, Toluoldiisocyanate, Isophorondiisocyanat, mund p-Xylidendiisocyanat oder Phenylisocyanat, Mono-, oder Polycarbodiimide, wie z B. N,N-Diisopropylcarbodiimid, N,N-Di-(o-tolyl)-carbodiimid, N,N-Dicyclohexylcarbodiimid. 2.2',6,6'-Tetraisopropyldiphenylcarbodiimid und Poly-(2.2-diisopropyl)-p-phenylencarbodiimid sowie Oxazolin-Derivate, Oxazoline. Oxazolone, N-substituierte 2-Oxazolidone, Fettalkyloxazoline. Hydroxifettalkyl-oxazoline und mit Hydroxisäuren, wie Ricinolsäure hergestellte Oxazoline und ihre Umsetzungsprodukte mit Isocyanaten und Diisocyanaten. Letztere sind beschrieben in *Farben und Lacke 1993 / 11, S 911 bis 915.*

Die gegebenenfalls verwendeten Tetraalkylharnstoffe d), wie z.B. Tetramethylharnstoff und Tetrabutylharnstoff oder N-dialkylierte cyclische Harnstoffe d), wie N,N'-Dimethylpropylenharnstoff oder N,N'-Dimethylethylenharnstoff sind bekannte Handelsprodukte und beschrieben in der Firmenschrift *BASF-Zwischenprodukte 1993.*

Gegebenenfalls vorhandene Additive f) mit verfahrens- oder verwendungsbedingten Eigenschaften sind nach dem Stand der Technik bekannt:

Carbonsäureester, Phosphorsäureester, Verarbeitungshilfsmittel, sowie
f1) Zusätze, die die Eigenschaften des Polylactams beeinflussen, wie Hitze- und Lichtstabilisatoren, Antioxydantien, Tracer, Duftstoffe,Farbstoffe, Pigmente, optische Aufheller, Weichmacher und Entformungsmittel.
f2) Zusätze, die den Polymerisationsverlauf direkt beeinflussen, wie Amine, Alkohole und Glykole. Ihre Wirkung ist beschrieben in ***US 3,017,391.***

Bevorzugte Flüssigsysteme sind:
Flüssigsystem 1:
   a) 45 bis 70 Gew.-Teile N-Alkyl-2-Pyrrolidon,
   b) 5 bis 30 Gew.-Teile Alkali-Lactamat,
   c) 10 bis 40 Gew.-Teile lactamverkapptes Diisocyanat,
   e) 2 bis 30 Gew.-Teile Caprolactam.
Flüssigsystem 2:
   a) 45 bis 70 Gew.-Teile N-Alkyl-2-Pyrrolidon,
   b) 5 bis 40 Gew.-Teile Alkali-Lactamat,
   c) 10 bis 40 Gew.-Teile Mono- oder Polycarbodiimid,
   e) 2 bis 30 Gew.-Teile Caprolactam.
Flüssigsystem 3:
   a) 45 bis 70 Gew.-Teile N-Alkyl-2-Pyrrolidon,
   b) 5 bis 40 Gew.-Teile Alkali-Lactamat,
   c) 10 bis 40 Gew.-Teile Oxazolin-Verbindung,
   e) 2 bis 30 Gew.-Teile Caprolactam.

Das erfindungsgemässe Flüssigsystem ist eine bei Raumtemperatur flüssige, unter Inertgas beziehungsweise in trockener Luft stabile, homogene Mischung, welche bei Zugabe zu einer wasserfreien Lactamschmelze schnell und homogen verteilt werden kann und direkt die Polymerisation auslöst.
Die Erfindung beinhaltet auch die Verwendung des erfindungsgemässen Flüssigsystems für die anionische Lactampolymerisation. Es wird dem wasserfreien Lactam, z.B. Butyro-, Valero-, Capro-, Laurin-, Önantholactam oder deren Gemischen, bevorzugt in Mengen von 0,5 bis 10 Gew.Teilen, zugegeben.
Dabei entsteht Polylactam wie Polycaprolactam oder insbesondere Polylaurinlactam von guter Qualität und mit hochwertigem mechanischen Eigenschaftsprofil.

Die Herstellung der erfindungsgemässen Flüssigsysteme wird nachfolgend beispielhaft erläutert:

### BEISPIELE 1 bis 4

Die Beispiele 1 bis 4 beschreiben die Herstellung von Flüssigsystemen.
Zur Herstellung des Flüssigsystems ist das Arbeiten unter Schutzgas-Atmosphäre angezeigt.
In einem Gefäss mit Innentemperaturmessung wird die Komponente a) vorgelegt und auf 30 bis maximal 70 °C erwärmt. Danach wird unter Rühren die Komponente c) eingetragen und homogen eingemischt. Nach entstehen einer klaren Lösung werden unter Kontrolle der Temperatur, welche 70 °C nicht überschreiten darf, die Komponente b) und anschliessend gegebenenfalls die Additive f) zugegeben.
Die resultierenden Lösungen sind bei Raumtemperatur flüssig und lagerstabil.

**Tabelle 1:**

| FLÜSSIGSYSTEME | | | | | | | | | |
|---|---|---|---|---|---|---|---|---|---|
| **No** | **Komponente a)** | **Teile a)** | **Komponente b)** | **Teile b)** | **Komponente c)** | **Teile c)** | **Komponente f)** | **Teile f)** | **Bemerkung** |
| 1 | NMP CL e) | 50 16,6 | Na-CL | 16,6 | CL-MDI | 16,6 | ------------ ----- | ------- --- | gelbe,klare Flüssigkeit |
| 2 | BL | 40 | Na-CL | 25 | PCD | 25 | PA | 10 | gelbe,klare Flüssigkeit |
| 3 | NMP | 30 | Na-CL | 30 | Bis-Ox Rc-Ox | 10 30 | ------------- ------ | ------- --- | gelbe,klare Flüssigkeit |
| 4 | NOP | 50 | Na-CL | 25 | CD | 25 | ------------- ----- | ------- --- | gelbe,klare Flüssigkeit |
| NMP: N-Methyl-2-Pyrrolidon | | | | | | | | | |
| BL: Butyrolactam | | | | | | | | | |
| NOP: N-Octyl-2-Pyrrolidon | | | | | | | | | |
| Na-CL: Natrium-Caprolactamat in Caprolactam, ca.5% Natriumgehalt, Pacast AG, Sargans ( CH ) | | | | | | | | | |
| PCD: Polycarbodiimid, Stabaxol P (R), Rhein Chemie GmbH, Mannheim (D) | | | | | | | | | |
| CL-MDI: Caprolactam verkapptes Methylendiisocyanat, Grilbond IL6 (R), Ems-Chemie AG, Domat/Ems ( CH ) | | | | | | | | | |
| Bis-Ox: Ricinyl-bisoxazolin, Loxamid 8523 (R), Henkel KG, Düsseldorf ( BRD ) | | | | | | | | | |
| Rc-Ox: Ricinyl-oxazolin, Loxamid 8515 (R), Henkel KG, Düsseldorf ( BRD ) | | | | | | | | | |
| CD: Substituiertes Diarylcarbodiimid, Stabaxol I (R), Rhein Chemie GmbH, Mannheim (D) | | | | | | | | | |
| PA: Phenolisches Antioxidant, Irganox 1135, Ciba-Geigy AG, Basel ( CH ) | | | | | | | | | |

### VERGLEICHSBEISPIEL

In einem Gefäss mit Innentemperaturmessung werden unter Stickstoffatmosphäre 60 Gew.-Teile N-Methyl-2-pyrrolidon auf 50°C erwärmt. Danach werden unter Rühren 40 Gew.-Teile Natrium-Caprolactamat ( ca. 3-5% Na-Gehalt, Fa Pacost, Sargans (CH) eingetragen. Es entsteht eine klare Lösung, die beim Abkühlen auf Raumtemperatur verschlackt.

### BEISPIELE 5 bis 9

Zur Verwendung der Flüssigsysteme zur Durchführung der aktivierten anionischen Lactampolymerisation kann nach folgender allgemeiner Vorschrift verfahren werden.
In einem Gefäss mit Innentemperaturmessung wird unter Stickstoff-Athmosphäre eine Lactam-Schmelze vorgelegt und unter kontrollierter Temperatur und Rühren das Flüssigsystem eingetragen.
Als Vergleichszeit t, um den Ablauf der Polymerisation zu beschreiben, wird die Zeitspanne bis zum Unrührbarwerden der Schmelze verwendet.
Anschliessend wird die Schmelze 60 min bei 175°C auspolymerisiert.

**Tabelle 2**

| Verwendung der Flüssigsysteme der Beispiele 1 bis 5 zur Lactampolymerisation | | | | | | | | |
|---|---|---|---|---|---|---|---|---|
| **No** | **Lactam** | **Teile** | **System gemäss** | **Teile** | **Schmelzetemperatur** | **Vergl. Zeit t** | **DSC- Smp Polymer** | **Bemerkung** |
| **6** | Caprolactam | 100 | Beispiel **1** | 6 | 140°C | 70sec | 211°C | keine Verfärbung |
| **7** | Laurinlactam | 100 | Beispiel **2** | 3 | 175°C | 200sec | 170°C | leichte Verfärbung |
| **8** | Laurinlactam | 100 | Beispiel **3** | 3 | 175°C | 10sec | 170°C | keine Verfärbung |
| **9** | Laurinlactam | 100 | Beispiel **4** | 3 | 175°C | 120sec | 171°C | keine Verfärbung |

## Patentansprüche

1. Bei Raumtemperatur flüssiges System für die anionische Lactampolymerisation, bestehend aus dem Umsetzungsprodukt von
a) mehr als 30 bis 80 Gew. Teilen a1) mindestens einer N-substituierten Carbonsäureamidverbindung der Formel I 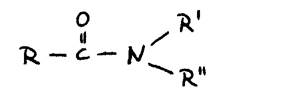 wobei R=Wasserstoff oder ein einwertiger Kohlenwasserstoffrest mit bis zu 12 C-Atomen ist, R'= ein einwertiger Kohlenwasserstoffrest mit bis zu 12 C-Atomen, und R" ein einwertiger Kohlenwasserstoffrest mit bis zu 20 C-Atomen, ist,
wobei zwei der Substituenten R und R' oder R' und R" gegebenenfalls miteinander verbunden sind und ein Ringsystem bilden und/oder a2) Butyrolactam oder Valerolactam,
b) 5 bis 30 Gew.-Teilen mindestens eines Alkali- und/oder Erdalkali-Lactamates,
c) 10 bis 40 Gew.-Teilen mindestens eines Aktivators für die anionische Lactampolymerisation welcher in a) und d) löslich ist,
d) 0 bis 30 Gew.-Teilen mindestens eines Tetraalkylharnstoffs und/oder eines N-dialkylierten cyclischen Harnstoffs,
gegebenenfalls e) 2 bis 30 Gew.-Teilen Caprolactam
wobei sich die Anteile von a), b), c), d) und e) auf 100 Gew.-Teile ergänzen
und gegebenenfalls f) weiteren Additiven.

2. Flüssigsystem nach Anspruch 1,
**dadurch gekennzeichnet, dass**
der Anteil der Carbonsäureamidverbindung a) 30 bis 70 Gew.-Teile beträgt.

3. Flüssigsystem nach einem der vorhergehenden Ansprüche,
**dadurch gekennzeichnet, dass**
der Anteil des Alkali- oder Erdalkali-Lactamates b) 5 bis 25 Gew.-Teile beträgt.

4. Flüssigsystem nach einem der vorhergehenden Ansprüche,
**dadurch gekennzeichnet, dass**
die Carbonsäureamidverbindung a) ausgewählt ist aus der Gruppe Butyrolactam, Valerolactam, Di-N-alkylformamid, Di-N-alkylacetamid, N-Acetylanilin, N-Acetylpiperidin, N,N'-Diacylpiperazin, N-Alkyl-Lactam mit C1- bis C12-Alkylresten, N-2-Octylpyrrolidon und ihre Mischungen.

5. Flüssigsystem nach einem der vorhergehehenden Ansprüche,
**dadurch gekennzeichnet, dass**
das Alkali-Lactamat b) ein Natrium-Lactamat ist.

6. Flüssigsystem nach Anspruch 5,
**dadurch gekennzeichnet, dass**
das Natrium-Lactamat Natrium-Caprolactamat oder Natrium-Laurinlactamat ist.

7. Flüssigsystem nach einem der Ansprüche 1 bis 4,
**dadurch gekennzeichnet, dass**
das Erdalkali-Lactamat b) ein Magnesium-Lactamat ist.

8. Flüssigsystem nach Anspruch 7,
**dadurch gekennzeichnet, dass**
das Magnesium-Lactamat Magnesium-Caprolactamat oder Magnesium-Laurinlactamat ist.

9. Flüssigsystem nach einem der vorhergehenden Ansprüche,
**dadurch gekennzeichnet, dass**
der Aktivator c) ausgewählt ist aus der Gruppe lactamverkapptes Monoisocyanat und Polyisocyanat, Carbodiimid, Polycarbodiimid, N-acylierte Carbonamidverbindung und Oxazolin-Verbindung.

10. Flüssigsystem nach Anspruch 9,
**dadurch gekennzeichnet, dass**
die Oxazolin-Verbindung ausgewählt ist aus der Gruppe Oxazolin-Derivate und Oxazoline.

11. Flüssigsystem nach Anspruch 10
**dadurch gekennzeichnet, dass**
die Oxazolin-Derivate ausgewählt sind aus der Gruppe Oxazolone, N-substituierte N-2-oxazolidone, Fettalkyl-oxazoline, und mit Hydroxisäuren hergestellte Bisoxazoline und ihre Umsetzungsprodukte mit Diisocyanaten.

12. Flüssigsystem nach einem der vorhergehenden Ansprüche,
**dadurch gekennzeichnet, dass**
die Additive f) ausgewählt sind aus der Gruppe Amine, Polyamine, Alkohole, Glykole, Carbonsäureester, Phosphorsäureester, Lichtstabilisatoren, Hitzestabilisatoren, optische Aufheller, Weichmacher, Tracer, Duftstoffe und Verarbeitungshilfsmittel.

13. Flüssigsystem nach Anspruch 1,
bestehend aus dem Umsetzungsprodukt von
a) 45 bis 70 Gew.-Teilen N-Alkyl-2-Pyrrolidon,
b) 5 bis 30 Gew.-Teilen Alkali-Lactamat,
c) 10 bis 40 Gew.-Teilen lactamverkapptem Diisocyanat,
e) 2 bis 30 Gew.-Teilen Caprolactam.

14. Flüssigsystem nach Anspruch 1,
bestehend aus dem Umsetzungsprodukt von
a) 45 bis 70 Gew.-Teilen N-Alkyl-2-Pyrrolidon,
b) 5 bis 40 Gew.-Teilen Alkali-Lactamat,
c) 10 bis 40 Gew.-Teilen Mono- oder Polycarbodiimid,
e) 2 bis 30 Gew.-Teilen Caprolactam.

15. Flüssigsystem nach Anspruch 1,
bestehend aus dem Umsetzungsprodukt von
a) 45 bis 70 Gew.-Teilen N-Alkyl-2-Pyrrolidon.
b) 5 bis 40 Gew.-Teilen Alkali-Lactamat,
c) 10 bis 40 Gew.-Teilen Oxazolin-Verbindung,
e) 2 bis 30 Gew.-Teilen Caprolactam.

16. Verwendung des Flüssigsystems nach einem der Anspüche 1 bis 15 in Mengen von 0,5 bis 10 Gew.Teilen, bezogen auf 100 Teile des zu polymerisierenden Lactams, für die anionische Polymerisation von Lactam.

17. Verwendung nach Anspruch 16,
**dadurch gekennzeichnet, dass**
das Lactam, Caprolactam, Laurinlactam, Önantholactam oder ein Gemisch davon ist.

## Claims

1. System liquid at room temperature for anionic lactam polymerisation, consisting of the reaction product of
a) more than 30 to 80 parts by wt. of a1) of at least one N-substituted carboxylic acid amide compound having formula I 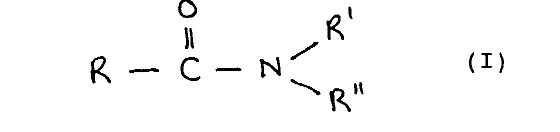 where R is hydrogen or a monovalent hydrocarbon radical having up to 12 carbon atoms,
R' is a monovalent hydrocarbon radical having up to 12 carbon atoms, and
R" is a monovalent hydrocarbon radical having up to 20 carbon atoms,
where two of the substituents R and R' or R' and R" are combined with one another if appropriate and form a ring system
and/or a2) butyrolactam or valerolactam,
b) 5 to 30 parts by wt. of at least one alkali lactamate and/or alkaline earth lactamate,
c) 10 to 40 parts by wt. of at least one activator for anionic lactam polymerisation which is soluble in a) and d),
d) 0 to 30 parts by wt. of at least one tetra-alkyl urea and/or an N-dialkylierten cyclic urea,
if appropriate e) 2 to 30 parts by wt. of caprolactam, where the proportions of a), b), c), d) and e) add up to 100 parts by wt.,
plus, if appropriate, f) further additives.

2. Liquid system according to claim 1,
characterised in that the proportion of the carboxylic acid amide compound a) is 30 to 70 parts by wt.

3. Liquid system according to either of the preceding claims,
characterised in that the proportion of the alkali lactamate or alkaline earth lactamate b) is 5 to 25 parts by wt.

4. Liquid system according to any of the preceding claims,
characterised in that the carboxylic acid amide compound a) is selected from the group comprising butyrolactam, valerolactam, di-N-alkyl formamide, di-N-alkyl acetamide, N-acetyl aniline, N-acetyl piperidine, N,N'-diacyl piperazine, N-alkyl-lactam having C1 to C12 alkyl radicals, N-2-octyl pyrrolidone and mixtures thereof.

5. Liquid system according to any of the preceding claims,
characterised in that the alkali lactamate b) is a sodium lactamate.

6. Liquid system according to claim 5,
characterised in that the sodium lactamate is sodium caprolactamate or sodium laurinlactamate.

7. Liquid system according to any of claims 1 to 4,
characterised in that the alkaline earth lactamate b) is a magnesium lactamate.

8. Liquid system according to claim 7,
characterised in that the magnesium lactamate is magnesium caprolactamate or magnesium laurinlactamate.

9. Liquid system according to any of the preceding claims,
characterised in that the activator c) is selected from the group comprising lactam-capped monoisocyanate and polyisocyanate, carbodiimide, polycarbodiimide, N-acylated carbonamide compound and oxazoline compound.

10. Liquid system according to claim 9,
characterised in that the oxazoline compound is selected from the group comprising oxazoline derivates and oxazolines.

11. Liquid system according to claim 10,
characterised in that the oxazoline derivatives are selected from the group comprising oxazolines, N-substituted N-2-oxazolidones, aliphatic alkyl oxazolines, and bis-oxazolines prepared with hydroxy acids and the reaction products thereof with diisocyanates.

12. Liquid system according to any of the preceding claims,
characterised in that the addives f) are selected from the group comprising amines, polyamines, alcohols, glycols, carboxylic acid esters, phosphoric acid esters, light stabilisers, heat stabilisers, optical whitening agents, softeners, tracers, aromatics and processing aids.

13. Liquid system according to claim 1,
made up of the reaction product of
a) 45 to 70 parts by wt. of N-alkyl-2-pyrrolidone,
b) 5 to 30 parts by wt. of alkali lactamate,
c) 10 to 40 parts by wt. of lactam-capped diisocyanate,
e) 2 to 30 parts by wt. of caprolactam.

14. Liquid system according to claim 1,
made up of the reaction product of
a) 45 to 70 parts by wt. of N-alkyl-2-pyrrolidone,
b) 5 to 40 parts by wt. of alkali lactamate,
c) 10 to 40 parts by wt. of monocarbodiimide or polycarbodiimide,
e) 2 to 30 parts by wt. of caprolactam.

15. Liquid system according to claim 1,
made up of the reaction product of
a) 45 to 70 parts by wt. of N-alkyl-2-pyrrolidone,
b) 5 to 40 parts by wt. of alkali lactamate,
c) 10 to 40 parts by wt. of oxazoline compound,
e) 2 to 30 parts by wt. of caprolactam.

16. Use of the liquid system according to any of claims 1 to 15 in quantities of 0.5 to 10 parts by wt., based on 100 parts of the lactam to be polymerised, for the anionic polymerisation of lactam.

17. Use according to claim 16,
characterised in that the lactam is caprolactam, laurinlactam, enantholactam or a mix thereof.

## Revendications

1. Système liquide à la température ambiante, pour la polymérisation anionique de lactame, constitué du produit de réaction de
a) plus de 30 à 80 parties en poids
a1) d'au moins un carboxamide N-substitué de formule I 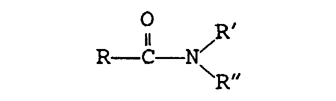 dans laquelle
R représente un atome d'hydrogène ou un radical hydrocarboné monovalent ayant jusqu'à 12 atomes de carbone et
R' représente un radical hydrocarboné monovalent ayant jusqu'à 12 atomes de carbone,
R" représente un radical hydrocarboné monovalent ayant jusqu'à 20 atomes de carbone,
deux des substituants, R et R' ou R' et R", étant éventuellement liés l'un à l'autre et formant un système cyclique
et/ou
a2) de butyrolactame ou valérolactame,
b) 5 à 30 parties en poids d'au moins un lactamate alcalin et/ou alcalino-terreux,
c) 10 à 40 parties en poids d'au moins un activateur pour la polymérisation anionique de lactame, qui est soluble dans a) et d),
d) 0 à 30 parties en poids d'au moins une tétraalkylurée et/ou une urée cyclique N-dialkylée,
éventuellement
e) 2 à 30 parties en poids de caprolactame,
les quantités de a), b), c), d) et e) formant au total 100 parties en poids,
et éventuellement
f) d'autres additifs.

2. Système liquide selon la revendication 1, caractérisé en ce que la proportion du carboxamide a) va de 30 à 70 % en poids.

3. Système liquide selon l'une des revendications précédentes, caractérisé en ce que la proportion du lactamate alcalin ou alcalino-terreux b) va de 5 à 25 parties en poids.

4. Système liquide selon l'une des revendications précédentes, caractérisé en ce que le carboxamide a) est choisi dans l'ensemble constitué par le butyrolactame, le valérolactame, un di-N-alkylformamide, un di-N-alkyl-acétamide, la N-acétylaniline, la N-acétylpipéridine, une N,N'-diacylpipérazine, un N-alkyl-lactame à radicaux alkyle en C₁-C₁₂, la N-2-octylpyrrolidone et des mélanges de ceux-ci.

5. Système liquide selon l'une des revendications précédentes, caractérisé en ce que le lactamate alcalin b) est un lactamate de sodium.

6. Système liquide selon la revendication 5, caractérisé en ce que le lactamate de sodium est le caprolactamate de sodium ou le laurolactamate de sodium.

7. Système liquide selon l'une des revendications 1 à 4, caractérisé en ce que le lactamate alcalino-terreux b) est un lactamate de magnésium.

8. Système liquide selon la revendication 7, caractérisé en ce que le lactamate de magnésium est le caprolactamate de magnésium ou le laurolactamate de magnésium.

9. Système liquide selon l'une des revendications précédentes, caractérisé en ce que l'activateur c) est choisi dans l'ensemble constitué par un mono-isocyanate et un poly-isocyanate coiffés par un lactame, le carbodiimide, le polycarbodiimide, un composé de type carboxamide N-acylé et un composé de type oxazoline.

10. Système liquide selon la revendication 10, caractérisé en ce que le composé de type oxazoline est choisi parmi des oxazolines et des dérivés d'oxazolines.

11. Système liquide selon la revendication 10, caractérisé en ce que les dérivés d'oxazolines sont choisis dans l'ensemble constitué par les oxazolones, les N-2-oxazolidones N-substituées, les (alkyl gras)-oxazolines et les bisoxazolines préparées avec des acides hydroxylés, et leurs produits de réaction avec des diisocyanates.

12. Système liquide selon l'une des revendications précédentes, caractérisé en ce que les additifs sont choisis dans l'ensemble constitué par des amines, polyamines, alcools, glycols, esters d'acides carboxyliques, esters d'acide phosphorique, photostabilisants, stabilisants thermiques, azurants optiques, plastifiants, marqueurs, parfums et agents auxiliaires de mise en oeuvre.

13. Système liquide selon la revendication 1, constitué du produit de réaction de
a) 45 à 70 parties en poids de N-alkyl-2-pyrrolidone,
b) 5 à 30 parties en poids de lactamate alcalin,
c) 10 à 40 parties en poids de diisocyanate coiffé par un lactame,
e) 2 à 30 parties en poids de caprolactame.

14. Système liquide selon la revendication 1, constitué du produit de réaction de
a) 45 à 70 parties en poids de N-alkyl-2-pyrrolidone,
b) 5 à 40 parties en poids de lactamate alcalin,
c) 10 à 40 parties en poids de mono- ou polycarbodiimide,
e) 2 à 30 parties en poids de caprolactame.

15. Système liquide selon la revendication 1, constitué du produit de réaction de
a) 45 à 70 parties en poids de N-alkyl-2-pyrrolidone,
b) 5 à 40 parties en poids de lactamate alcalin,
c) 10 à 40 parties en poids de composé de type oxazoline,
e) 2 à 30 parties en poids de caprolactame.

16. Utilisation du système liquide selon l'une des revendications 1 à 15, en proportions de 0,5 à 10 parties en poids, par rapport à 100 parties du lactame à polymériser, pour la polymérisation anionique de lactame.

17. Utilisation selon la revendication 16, caractérisée en ce que le lactame est le caprolactame, le laurolactame, l'oenantholactame ou un mélange de ceux-ci.
